# EUROPÄISCHE PATENTSCHRIFT

(11) **EP 1 578 837 B1**
(45) Veröffentlichungstag und Bekanntmachung des Hinweises auf die Patenterteilung: **06.06.2012**
(21) Anmeldenummer: 03789153.8
(22) Anmeldetag: 06.12.2003
(51) Int. Cl.: C08G 18/80, C08G 18/12, C08G 18/08

(54) **HYDROPHILE POLYURETHAN-POLYHARNSTOFF-DISPERSIONEN**
HYDROPHILIC POLYURETHANE POLYUREA DISPERSIONS
DISPERSIONS HYDROPHILES DE POLYURETHANNE-POLYUREE

(30) Priorität: 20.12.2002 DE 10260270
(43) Veröffentlichungstag der Anmeldung: 28.09.2005
(73) Patentinhaber: Bayer MaterialScience AG, 51368 Leverkusen (DE)
(72) Erfinder: GERTZMANN, Rolf, 51377 Leverkusen (DE); GÜRTLER, Christoph, 50676 Köln (DE); RISCHE, Thorsten, 59423 Unna (DE); MÜNZMAY, Thomas, 41539 Dormagen (DE)
(86) Internationale Anmeldenummer: PCT/EP2003/013815
(87) Internationale Veröffentlichungsnummer: WO 2004/058846

(56) Entgegenhaltungen:
- DE-A- 19 548 030

## Beschreibung

Die vorliegende Erfindung betrifft neue hydrophile Polyurethan-Präpolymere sowie deren wässrige Polyurethan-Polyharnstoff (PUR-)-Dispersionen.

Bei der Beschichtung von Substraten werden zunehmend lösemittelhaltige Bindemittel durch wässrige umweltfreundliche Systeme ersetzt. Insbesondere spielen Bindemittel auf Basis von Polyurethan-Polyharnstoff-Dispersionen aufgrund ihrer exzellenten Eigenschaften eine zunehmende Rolle.

In vielen Bereichen werden sogenannte nachvernetzbare PUR-Dispersionen verwendet. Der Vemetzungsmechanismus dieser Systeme basiert auf blockierten Isocyanatgruppen in Kombination mit isocyanatreaktiven Gruppen.

Die Blockierung von Polyisocyanaten zum zeitweisen Schutz der Isocyanat-Gruppen ist eine seit langem bekannte Arbeitsmethode und wird z.B. im Houben Weyl, Methoden der organischen Chemie XIV/2, S. 61-70 beschrieben. Härtbare Zusammensetzungen, die blockierte Polyisocyanate enthalten, finden z.B. Verwendung in Polyurethan-Lacken.

Eine Übersicht prinzipiell geeigneter Blockierungsmittel findet sich z.B. bei Wicks et al. in Progress in Organic Coatings 1975, 3, S. 73-79, 1981, 9, S. 3-28 und 1999, 36, S.148-172.

Die Herstellung von blockierten Isocyanatgruppen enthaltenden PolyurethanDispersionen ist in der Literatur beispielsweise in der DE-A 195 48 030 beschrieben.

Nachteilig bei der Verwendung von nachvemetzbaren Polyurethandispersionen des Standes der Technik ist, dass nach der Deblockierung und Vernetzung ein gewisser Anteil des Blockierungsmittels im entstehenden Lackfilm als Monomer verbleibt und dessen Eigenschaft nachteilig beeinflußt. Eigenschaften wie Kratzfestigkeit und Säurestabilität von Einkomponenten-Lackfilmen sind aufgrund des verbleibenden Blockierungsmittels mit denen sogenannter Zweikomponenten-(2K)-Polyurethan-Beschichtungen nicht vergleichbar (z.B. T. Engbert, E. König, E. Jürgens, Farbe&Lack, Curt R. Vincentz Verlag, Hannover 10/1995).

Die Herstellung solcher Systeme wird unter Kettenverlängerung im Bereich von 90 bis 120°C durchgeführt, so dass eine solche Vernetzung in wässrigen Systemen nur unter Destabilisierung der Dispersionspartikel stattfinden kann. Die aus dem Stand der Technik bekannten Methoden zur Verlängerung bzw. Vernetzung von NCO-Präpolymeren erfolgen durch Umsetzung von isocyanatfunktionellen Präpolymeren mit gegenüber Isocyanaten reaktiven Komponenten. Im wässrigen Medium kommt es zu einer unkontrollierten und wenig reproduzierbaren Reaktion von Wasser mit den Isocyanatgruppen, die um so ausgeprägter ist, je reaktiver das eingesetzte Isocyanat ist. Eine Kettenverlängerung mit Aminen ist somit nur schwer reproduzierbar und kann bei gleicher Zusammensetzung der Reaktionsmischung zu Dispersionen mit unterschiedlichen pH-Werten führen.

Bei der Herstellung von Dispersionen nach dem Acetonverfahren lassen sich auch reaktive aromatische Diisocyanate verwenden, doch ist es bei diesem Verfahren notwendig größere Mengen an Aceton zu verwenden, das später wieder in einem aufwendigen zweiten Reaktionsschritt abdestilliert werden muss.

Die Aufgabe der vorliegenden Erfindung bestand in der Bereitstellung neuer hydrophiler Polyurethan-Präpolymere, die sich problemlos zu wässrigen Polyurethandispersionen verarbeiten lassen und die aus dem Stand der Technik bekannten Nachteile nicht aufweisen.

Es wurde nun gefunden, dass sich mit CH-aziden Verbindungen der Grundstruktur eines aktivierten cyclischen Ketons, besonders des Cyclopentanon-2-carboxyethylesters, abspalterfreie hydrophile Polyurethan-Präpolymere herstellen lassen, die es erlauben, eine kontrollierte aminische Kettenverlängerung in der wässrigen Phase durchzuführen.

Gegenstand der vorliegenden Erfindung sind hydrophile Polyurethan(PUR)-Präpolymere, enthaltend ein Polymergerüst mit Struktureinheiten der Formel (I), 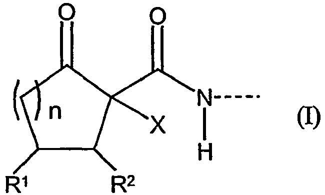 in welcher
- R¹ und R²: unabhängig voneinander die Reste H, C₁-C₂₀-(Cyclo)alkyl, C₆-C₂₄-Aryl, C₁-C₂₀-(Cyclo)alkylester oder -amid, C₆-C₂₄-Arylester oder -amid, gemischt aliphatisch/aromatische Reste mit 1 bis 24 Kohlenstoffatomen sind, die auch Teil eines 4- bis 8-gliedrigen Ringes sein können und
- X: eine elektronenziehende Gruppe,
- n: eine ganze Zahl von 0 bis 5 ist,
sowie mit Struktureinheiten polymerer Polyole des mittleren Molgewichtsbereichs von 400 bis 6000, wobei das Polymergerüst über ionische bzw. potientiell ionische und/oder nichtionisch hydrophilierend wirkende Gruppen verfügt.

Eine potentiell ionische Gruppe ist im Sinne der Erfindung eine Gruppe, die zur Ausbildung einer ionischen Gruppe befähigt ist.

Ebenfalls Gegenstand der vorliegenden Erfindung sind wässrige Polyurethan-Polyhamstoff-Dispersionen, enthaltend die allgemeine Struktureinheit (II), 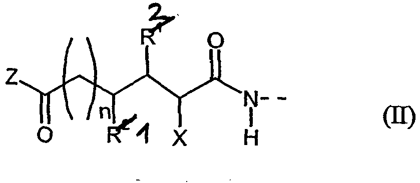 in welcher
- R¹ und R²: unabhängig voneinander die Reste H, C₁-C₂₀-(Cyclo)alkyl, C₆-C₂₄-Aryl, C₁-C₂₀-(Cyclo)alkylester oder -amid, C₆-C₂₄-Arylester oder -amid, gemischt aliphatisch/aromatische Reste mit 1 bis 24 Kohlenstoffatomen sind, die auch Teil eines 4- bis 8-gliedrigen Ringes sein können,
- X: eine elektronenziehende Gruppe ist,
- Z: für OH, OR³ oder NR⁴R⁵ steht, wobei
R³ ein C₁-C₂₀-(Cyclo)alkyl-Rest, C₂-C₁₈-Alkenyl-Rest, C₅-C₈-Cycloalkenyl-Rest, C₂-C₁₈-Alkinyl-Rest, C₆-C₂₄-Aryl-Rest, C₁-C₂₀-(Cyclo)alkylester- oder -amid-Rest, C₆-C₂₄-Arylester- oder -amid-Rest, C₃-C₁₂-Heterocycloalkyl-Reste, die unsubstituiert oder substituiert mit NO₂-, Amino-, Cyano-, Carboxy-, Ester, Keto- oder Aldehydgruppen vorliegen können,
R⁴/R⁵ unabhängig voneinander die Reste H, C₁-C₂₀-(Cyclo)alkyl, C₂-C₁₈-Alkenyl, C₅-C₈-Cyloalkenyl, C₂-C₁₈-Alkinyl, C₆-C₂₄-Aryl, C₁-C₂₀-(Cyclo)alkylester oder -amid, C₆-C₂₄-Arylester oder -amid, C₃-C₁₂-Heterocycloalkyl-Reste, die unsubstituiert oder substituiert mit NO₂- Amino-, Cyano-, Carboxy-, Ester, Keto- oder Aldehydgruppen vorliegen können und R⁴ und R⁵ gemeinsam mit dem N-Atom einen C₃-C₁₂-Cycloalkyl- oder ein C₃-C₁₃-Heterocycloalkyl-Rest, enthaltend O-, S- oder N-Atome, bilden können,
und/oder die allgemeine Struktureinheit (III), 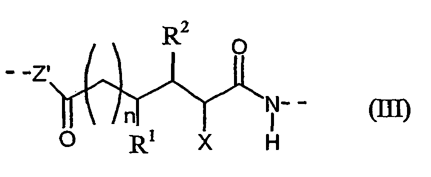 in welcher
- R¹, R² und X: die vorangenannte Bedeutung haben und
- Z': für ein verbrückendes O- oder verbrückendes sekundäres oder tertiäres N-Atom steht und
- n: eine ganze Zahl von 0 bis 5 ist.

Gegenstand der Erfindung ist außerdem ein Verfahren zur Herstellung der erfindungsgemäßen hydrophilen Polyurethan-Präpolymere, dadurch gekennzeichnet, dass
A1) mindestens ein Polyisocyanat mit aliphatisch, cycloaliphatisch, araliphatisch und/oder aromatisch gebundenen Isocyanatgruppen mit
A2) polymeren Polyolen des mittleren Molgewichtsbereichs von 400 bis 6000,
A3) gegebenenfalls einem oder mehreren mehrwertigen Alkoholen mit 1 bis 4 Hydroxylgruppen des Molekulargewichtsbereichs bis 400,
A4) mindestens einer ionischen und/oder potentiell ionischen und/oder nichtionischen hydrophilen Verbindung mit gegenüber NCO-Gruppen reaktiven Gruppen,
A5) mindestens einem CH-aziden cyclischen Keton der allgemeinen Formel (IV), 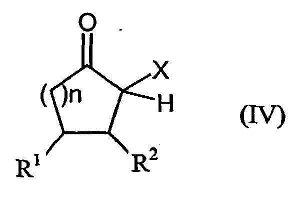 in welcher
   - X: eine elektronenziehende Gruppe,
   - R¹ und R²: unabhängig voneinander die Reste H, C₁-C₂₀-(Cyclo)alkyl, C₆-C₂₄-Aryl, C₁-C₂₀-(Cyclo)alkylester oder -amide, C₆-C₂₄-Arylester oder - amid, gemischt aliphatisch/aromatische Reste mit 1 bis 24 Kohlenstoffatomen, die auch Teil eines 4- bis 8-gliedrigen Ringes sein können, darstellen,
   - n: eine ganze Zahl von 0 bis 5 ist und mit
A6) gegebenenfalls einem oder mehreren (cyclo)aliphatischen Mono- oder Polyaminen oder Aminoalkoholen mit 1 bis 4 Aminogruppen des Molekulargewichtsbereichs bis 400,
   in Gegenwart eines Katalysators und gegebenenfalls in Gegenwart gegenüber Isocyanaten inerten organischen Lösemitteln umgesetzt werden, wobei das Stoffmengenverhältnis von Isocyanatgruppen zu gegenüber Isocyanatgruppen reaktiven Gruppen von 0,5 bis 3, bevorzugt von 0,95 bis 2, besonders bevorzugt von 1,00 bis 1,8 beträgt.

Bevorzugt enthalten die erfindungsgemäßen Polyurethan-Präpolymere 10 bis 40 Gew.-% A1), 30 bis 85 Gew.-% A2), 0 bis 15 Gew.-% A3), 1 bis 40 Gew.-% A4), 0,1 bis 40 Gew.-% A5) sowie 0,1 bis 15 Gew.-% A6), wobei sich die Summe der Komponenten zu 100 Gew.-% addiert.

Besonders bevorzugt enthalten die erfindungsgemäßen Polyurethan-Präpolymere 10 bis 30 Gew.-% A1), 30 bis 80 Gew.-% A2), 0 bis 12,5 Gew.-% A3), 1 bis 35 Gew.-% A4), 1 bis 30 Gew.-% A5) sowie 0,5 bis 15 Gew.-% A6), wobei sich die Summe der Komponenten zu 100 Gew.-% addiert.

Ganz besonders bevorzugt enthalten die erfindungsgemäßen Polyurethan-Präpolymere 15 bis 30 Gew.-% A1), 30 bis 70 Gew.-% A2), 0 bis 10 Gew.-% A3), 1 bis 30 Gew.-% A4), 5 bis 25 Gew.-% A5) sowie 0,5 bis 10 Gew.-% A6), wobei sich die Summe der Komponenten zu 100 Gew.-% addiert.

Ebenfalls Gegenstand der vorliegenden Erfindung ist ein Verfahren zur Herstellung wässriger Polyurethan-Polyharnstoff-Dispersionen, dadurch gekennzeichnet, dass das PUR-Präpolymer, enthaltend ein Polymergerüst mit Struktureinheiten der Formel (I), 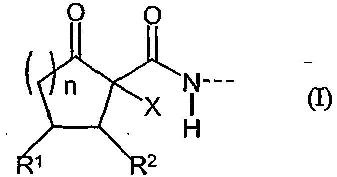 in welcher
- R¹ und R²: unabhängig voneinander die Reste H, C₁-C₂₀-(Cyclo)alkyl, C₆-C₂₄-Aryl, C₁-C₂₀-(Cyclo)alkylester oder -amid, C₆-C₂₄-Arylester oder -amid, gemischt aliphatisch/aromatische Reste mit 1 bis 24 Kohlenstoffatomen sind, die auch Teil eines 4 bis 8-gliedrigen Ringes sein können und
- X: eine elektronenziehende Gruppe,
- n: eine ganze Zahl von 0 bis 5 ist,
sowie mit Struktureinheiten polymerer Polyole des mittleren Molgewichtsbereichs von 400 bis 6000, wobei das Polymergerüst über ionische bzw. potientiell ionische und/oder nichtionisch hydrophilierend wirkende Gruppen verfügt, in die wässrige Phase überführt wird und im Falle der ionischen oder potentiell ionischen Gruppen diese vorher oder gleichzeitig teilweise oder vollständig neutralisiert werden, wobei vor oder nach der Dispergierung eine Kettenverlängerung mit aminischen Komponenten (A4) und/oder (A6) erfolgt.

Der Feststoffgehalt der erfindungsgemäßen PUR-Dispersionen kann in Grenzen von 10 bis 70 Gew.-% variiert werden. Bevorzugt enthalten die erfindungsgemäßen PUR-Dispersionen einen Festkörpergehalt von 20 bis 60 Gew.-% und besonders bevorzugt von 25 bis 50 Gew.-%. Der Anteil von organischen Lösemitteln an der Gesamtzusammensetzung ist bevorzugt kleiner 15 Gew.-%, besonders bevorzugt kleiner 10 Gew.-% und ganz besonders bevorzugt kleiner 5 Gew.-%.

Die Zusammensetzung der Dispersionen entspricht der für die erfindungsgemäßen PUR-Präpolymere definierte Zusammensetzung, wobei es unerheblich ist, ob die Kettenverlängerung mit aminischen Komponenten (A4) und/oder (A6) auf der Stufe der PUR-Präpolymerherstellung oder auf der Stufe der Dispersionsherstellung in wässriger Phase erfolgt.

Geeignete Diisocyanate (A1) sind grundsätzlich solche des Molekulargewichtsbereichs 140 bis 400 mit aliphatisch, cycloaliphatisch, araliphatisch und/oder aromatisch gebundenen Isocyanatgruppen, wie z.B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanatomethylcyclohexan, Bis-(isocyanatomethyl)-norbornan, 1,3- und 1,4-Bis-(2-isocyanato-prop-2-yl)-benzol (TMXDI), 2,4- und 2,6-Diisocyanatotoluol (TDI), 2,4'-und 4,4'-Diisocyanatodiphenylmethan, 1,5-Diisocyanatonaphthalin oder beliebige Gemische solcher Diisocyanate. Bevorzugt werden 1,6-Diisocyanatohexan (HDI), 1-Isocyanato-3,3,5-trimethyl-5-isocyanatomethylcyclohexan (Isophorondiisocyanat, IPDI), 1,4-Bis-(isocyanatomethyl)-cyclohexan, 2,4- und 2,6-Diisocyanatotoluol (TDI), 2,4'- und 4,4'-Diisocyanatodiphenylmethan. Besonders bevorzugt werden 1,6-Diisocyanatohexan (HDI), 1-Isocyanato-3,3,5-trimethyl-5-isocyanatomethylcyclohexan (Isophorondiisocyanat, IPDI) und 2,4- und 2,6-Diisocyanatotoluol (TDI).

Anteilig können auch Polyisocyanate A1) eingesetzt werden, die durch Modifizierung einfacher aliphatischer, cycloaliphatischer, araliphatischer und/oder aromatischer Diisocyanate hergestellt werden können, wie z.B. aus mindestens zwei Diisocyanaten aufgebaute Polyisocyanate mit Uretdion-, Isocyanurat-, Urethan-, Allophanat-, Biuret-, Iminooxadiazindion- und/oder Oxadiazintrionstruktur, wie sie beispielsweise in J. Prakt. Chem. 336 (1994) S. 185 - 200 beschrieben sind.

Die polymeren Polyole A2) in dem Molgewichtsbereich von 400 bis 6000 sind die üblichen wie sie für Polyurethane bereits seit langem eingesetzt werden, mit einer OH-Funktionalität von mindestens 1,6 bis 4, wie zum Beispiel Polyacrylate, Polyester, Polylactone, Polyether, Polycarbonate, Polyestercarbonate, Polyacetale, Polyolefine und Polysiloxane. Bevorzugt sind Polyole in einem Molgewichtsbereich von 600 bis 2500 mit einer OH-Funktionalität von 1,8 bis 3 und besonders bevorzugt 1,9 bis 2,1. Besonders bevorzugte Polyole sind Polyester-, Polyether- und Polycarbonatpolyole.

Die in Frage kommenden Hydroxylgruppen aufweisenden Polycarbonate sind durch Reaktion von Kohlensäurederivaten, z.B. Diphenylcarbonat, Dimethylcarbonat oder Phosgen mit Diolen erhältlich. Als derartige Diole kommen z.B. Ethylenglykol, 1,2-und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A, Tetrabrombisphenol A aber auch Lacton-modifizierte Diole in Frage. Bevorzugt enthält die Diolkompomponente 40 bis 100 Gew.-% Hexandiol, bevorzugt 1,6-Hexandiol und/oder Hexandiol-Derivate, bevorzugt solche, die neben endständigen OH-Gruppen Ether- oder Estergruppen aufweisen.

Die Hydroxylpolycarbonate sollten linear sein. Sie können jedoch gegebenenfalls durch den Einbau polyfunktioneller Komponenten, insbesondere niedermolekularer Polyole, leicht verzweigt werden. Hierzu eignen sich beispielsweise Glycerin, Trimethylolpropan, Hexantriol-1,2,6, Butantriol-1,2,4, Trimethylolpropan, Pentaerythrit, Chinit, Mannit, und Sorbit, Methylglykosid, 1,3; 4,6-Dianhydrohexite. Als Polyetherpolyole geeignet sind die in der Polyurethanchemie an sich bekannten Polytetramethylenglykolpolyether, die z.B. über Polymerisation von Tetrahydrofuran durch kationische Ringöffnung hergestellt werden können.

Darüber hinaus geeignete Polyetherpolyole sind Polyether, wie z.B. die unter Verwendung von Startermolekülen hergestellten Polyole aus Styroloxid, Propylenoxid, Butylenoxid, Ethylenoxid oder Epichlorhydrin, insbesondere Propylenoxid. Die als A2) geeigneten Polyalkylenoxidpolyether bestehen aus weniger als 30 mol-% Ethylenoxideinheiten.

Als Polyesterpolyole geeignet sind z.B. Umsetzungsprodukte von mehrwertigen, bevorzugt zweiwertigen und gegebenenfalls zusätzlich dreiwertigen Alkoholen mit mehrwertigen, bevorzugt zweiwertigen Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Bei der Komponente A3) handelt es sich um mono-, di-, tri- und/oder tetrahydroxyfunktionelle Substanzen des Molekulargewichts bis 400, wie z.B. Ethylenglykol, Propylenglykol, 1,4-Butandiol, 1,6-Hexandiol, Glycerin, Trimethylolethan, Trimethylolpropan, die isomeren Hexantriole, Pentaerythrit oder Gemische dieser Verbindungen.

Bevorzugte Komponenten A3) sind beispielsweise
a) Alkandiole, wie Ethandiol, 1,2- und 1,3-Propandiol, 1,4- und 2,3-Butandiol, 1,5-Pentandiol, 1,3 Dimethylpropandiol, 1,6-Hexandiol, Neopentylglykol, Cyclohexandimethanol, 2-Methyl-1,3-propandiol,
b) Etherdiole, wie Diethylendiglykol, Triethylenglykol oder Hydrochinon-dihydroxyethylether,
c) Esterdiole der allgemeinen Formeln (V) und (VI),

   HO-R-CO-O-R-OH (V),

   HO-R-O-CO-R-CO-O-R-OH (VI),

   in welchen
   R unabhängig voneinander lineare oder verzweigte (Cyclo-)Alkylen- oder Arylenreste mit 1 bis 10 C-Atomen, bevorzugt 2 bis 6 C-Atomen, bedeuten
wie z.B. δ-Hydroxybutyl-ε-hydroxy-capronsäureester, ω-Hydroxyhexyl-γ-hydroxybuttersäureester, Adipinsäure-(β-hydroxyethyl)ester oder Terephthal-säurebis(β-hydroxy-ethyl)ester.

Geeignete Komponenten A4) sind ionische oder potentiell ionische und/oder nichtionische hydrophile Verbindungen mit gegenüber Isocyanaten reaktive Gruppen.

Nichtionische hydrophile Verbindungen A4) sind beispielsweise einwertige, im statistischen Mittel 5 bis 70, bevorzugt 7 bis 55 Ethylenoxideinheiten pro Molekül aufweisende Polyalkylenoxidpolyetheralkohole, wie sie in an sich bekannter Weise durch Alkoxylierung geeigneter Startermoleküle zugänglich sind (z.B. in Ullmanns Encyclopädie der technischen Chemie, 4.Auflage, Band 19, Verlag Chemie, Weinheim S. 31-38). Geeignete Startermoleküle sind beispielsweise gesättigte Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol. Diethylenglykolmonoalkylether wie beispielsweise Diethylenglykolmonobutylether; ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol; sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol sind ebenfalls geeignet.

Bevorzugte Startermoleküle sind gesättigte Monoalkohole sowie Diethylenglykolmonoalkylether. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol-%, bevorzugt zu mindestens 40 mol-% aus Ethylenoxideinheiten bestehen. Bevorzugte nichtionische hydrophile Verbindungen A4) sind monofunktionelle gemischte Polyalkylenoxidpolyether, die mindestens 40 mol-% Ethylenoxid- und maximal 60 mol-% Propylenoxideinheiten aufweisen.

Geeignete ionische oder potentiell ionische Komponenten A4), die zusätzlich oder anstelle der nichtionischen Verbindungen eingesetzt werden können sind z.B. Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren bzw. Mono- und Diaminophosphonsäuren und ihre Salze wie Dimethylolpropionsäure, Hydroxypivalinsäure, N-(2-Aminoethyl)-β-alanin, 2-(2-Amino-ethylamino)-ethansulfonsäure, Ethylendiamin-propyl- oder - butylsulfonsäure, 1,2- oder 1,3-Propylendiamin-β-ethylsulfonsäure, Lysin, 3,5-Diaminobenzoesäure, das Hydrophilierungsmittel gemäß Beispiel 1 aus der EP-A 0 916 647 und deren Alkali- und/oder Ammoniumsalze; das Addukt von Natriumbisulfit an Buten-2-diol-1,4, Polyethersulfonat, das propoxylierte Addukt aus 2-Butendiol und NaHSO₃ (z.B. in der DE-A 2 446 440, Seite 5-9, Formel I-III) sowie in kationische Gruppen überführbare Bausteine wie N-Methyl-diethanolamin als hydrophile Aufbaukomponenten verwendet werden. Weiterhin kann als Komponente A4) auch CAPS (Cyclohexylaminopropansulfonsäure) wie z.B. in der WO 01/88006 beschrieben, eingesetzt werden.

Bevorzugte ionische oder potentiell ionische Verbindungen A4) sind solche, die über Carboxy- oder Carboxylat- und/oder Sulfonatgruppen und/oder Ammoniumgruppen verfügen. Besonders bevorzugte ionische Verbindungen A4) sind solche, die Sulfonatgruppen und/oder Carboxylatgruppen als ionische oder potentiell ionische Gruppen enthalten, wie die Salze von 2-(2-Amino-ethylamino)-ethansulfonsäure, Dimethylolpropionsäure und des Hydrophilierungsmittels gemäß Beispiel 1 aus der EP-A 0 916 647.

Als Komponente A5) sind CH-azide cyclische Ketone der allgemeinen Formel (IV), 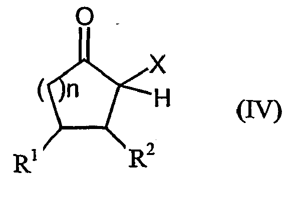 in welcher
- X: eine elektronenziehende Gruppe,
- R¹ und R²: unabhängig voneinander die Reste H, C₁-C₂₀-(Cyclo)alkyl, C₆-C₂₄-Aryl, C₁-C₂₀-(Cyclo)alkylester oder -amid, C₆-C₂₄-Arylestcr oder - amide, gemischt aliphatisch/atomatische Reste mit 1 bis 24 Kohlenstoffatomen, die auch Teil eines 4- bis 8-gliedrigen Ringes sein können, darstellen,
- n: eine ganze Zahl von 0 bis 5 ist,
geeignet.

Bei der elektronenziehenden Gruppe X kann es sich um alle Substituenten handeln, die zu einer CH-Azidität des α-ständigen Wasserstoffes führen. Dies können beispielsweise Estergruppen, Sulfoxidgruppen, Sulfongruppen, Nitrogruppe, Phosphonatgruppen, Nitrilgruppen, Isonitrilgruppen oder Carbonylgruppen sein. Bevorzugt sind Nitril-und Estergruppen, besonders bevorzugt Carbonsäutemethylester- und Carbonsäureethylestergruppen.

Bevorzugt weist das aktivierte cyclische System der Formel (IV) eine Ringgröße von 5 (n = 1) und 6 (n = 2) auf.

Bevorzugte Verbindungen der allgemeinen Formel (IV) sind Cyclopentanon-2-carboxymethylester und -carboxyethylester, Cyclopentanon-2-carbonsäurenitril,

Cyclohexanon-2-carboxymethylester und -carboxyethylester oder Cyclopentanon-2-carbonylmethan. Besonders bevorzugt sind Cyclopentanon-2-carboxymethylester und -carboxyethylester sowie Cyclohexanon-2-carboxymethylester und -carboxyethyl-ester. Die Cyclopentanonsysteme sind technisch leicht durch eine Dieckmann Kondensation von Adipinsäuredimethylester oder Adipinsäurediethylester erhältlich. Cyclohexanon-2-carboxymethylester kann durch Hydrierung von Salicylsäuremethylester hergestellt werden.

Selbstverständlich können auch Gemische dieser CH-aziden Ketone untereinander und/oder mit anderen Blockierungsmitteln eingesetzt werden. Geeignete weitere Blockierungsmittel sind beispielsweise Alkohole, Lactame, Oxime, Malonester, Alkylacetoacetate, Triazole, Phenole, Imidazole, Pyrazole sowie Amine, wie z.B. Butanonoxim, Diisopropylamin, 1,2,4-Triazol, Dimethyl-1,2,4-triazol, Imidazol, Malonsäurediethylester, Acetessigester, Acetonoxim, 3,5-Dimethylpyrazol, ε-Caprolactam, N-Methyl-, N-Ethyl-, N-(Iso)propyl-, N-n-Butyl-, N-iso-Butyl-, N-tert.-Butyl-benzylamin oder 1,1-Dimethylbenzylamin, N-Alkyl-N-1,1-Dimethylmethylphenylamin, Addukte von Benzylamin an Verbindungen mit aktivierten Doppelbindungen wie Malonsäureestern, N,N-Dimethylaminopropylbenzylamin und andere tertiäre Aminogruppen enthaltende gegebenenfalls substituierte Benzylamine und/oder Dibenzylamin oder beliebige Gemische dieser Blockierungsmittel.

Bevorzugt werden Cyclopentanon-2-carboxymethylester; Cyclopentanon-2-carboxyethylester und Cyclohexanon-2-cyarboxymethylester als Blockierungsmittel A5) verwendet. Besonders bevorzugtes Blockierungsmittel A5) ist Cyclopentanon-2-carboxyethylester.

Als Komponente A6) kommen weitere, gegenüber Isocyanaten reaktive Komponenten wie mono-, di-, tri-, und/oder tetra-aminofunktionelle Substanzen sowie Aminoalkohole des Molekulargewichtsbereichs bis 400 in Betracht, wie z.B. Ethylendiamin, 1,2- und 1,3-Diaminopropan, 1,3-, 1,4- und 1,6-Diaminohexan, 1,3-Diamino-2,2-dimethylpropan, 1-Amino-3,3,5-trimethyl-5-aminoethyl-cyclohexan (IPDA), 4,4'-Diaminodicyclohexylmethan, 2,4- und 2,6-Diamino-1-methylcyclohexan, 4,4'-Diamino-3,3'-dimethyl-dicyclohexylmethan, 1,4-Bis-(2-aminoprop-2-yl)-cyclohexan, Polyamine wie Ethylendiamin, 1,2- und 1,3-Diaminopropan, 1,4-Diaminobutan, 1,6-Diaminohexan, Isophorondiamin, Isomerengemisch von 2,2,4- und 2,4,4-Trimethylhexamethylendiamin, 2-Methyl-pentamethylendiamin, Diethylentriamin, 1,3- und 1,4-Xylylendiamin, α,α,α',α'-Tetramethyl-1,3- und -1,4-xylylendiamin und 4,4-Diaminodicyclohexylmethan, Aminoethanol, Diethanolamin oder Gemische dieser Verbindungen. Als Diamine im Sinne der Erfindung sind auch Hydrazin, Hydrazinhydrat und substituierte Hydrazine geeignet, wie z.B. N-Methylhydrazin, N,N'-Dimethylhydrazin und deren Homologe sowie Säuredihydrazide der Adipinsäure, β-Methyladipinsäure, Sebacinsäure, Hydracrylsäure und Terephthalsäure, Semicarbazido-alkylenhydrazide, wie z.B. β-Semicarbazidopropionsäurehydrazid (z.B. DE-A 17 70 591), Semicarbazidoalkylencarbazinester, wie z.B. 2-Semicarbazidoethylcarbazinester (z.B. DE-A 19 18 504) oder auch Aminosemicarbazid-Verbindungen, wie z.B. β-Aminoethylsemicarbazidocarbonat (z.B. DE-A 19 02 931).

Zur Herstellung der erfindungsgemäßen Polyurethan-Präpolymere werden üblicherweise die Bestandteile A1) bis A5), die keine primären oder sekundären Aminogruppen aufweisen im Reaktor ganz oder teilweise vorgelegt und gegebenenfalls mit einem mit Wasser mischbaren, aber gegenüber Isocyanatgruppen inerten Lösungsmittel verdünnt, bevorzugt aber ohne Lösungsmittel, auf höhere Temperaturen, bevorzugt im Bereich von 40 bis 140°C, besonders bevorzugt 40 bis 90 °C, aufgeheizt.

Bevorzugt wird bei der Herstellung der Polyurethanketten die Komponente A5) zu einem NCO-Präpolymer nach vollständiger Umsetzung von A1) bis A4) dem Reaktionsgemisch in Gegenwart eines Katalysators zugegeben.

Als Katalysatoren für die Reaktion der Komponente A5) mit den Isocyanatgruppen im erfindungsgemäßen Verfahren sind Alkali- und Erdalkalimetallbasen, wie z.B. gepulvertes Natriumcarbonat (Soda) geeignet. Es können auch, je nach verwendetem cyclischen Keton, Trinatriumphosphat oder DABCO (1,4-Diazabicyclo[2.2.2]octan) eingesetzt werden. Ebenfalls sind die Carbonate der Metalle der zweiten Nebengruppe geeignet. Bevorzugt wird Natriumcarbonat oder Kaliumcarbonat eingesetzt. Alternativ kann die Umsetzung des cyclischen Ketons mit dem Isocyanat auch in Gegenwart von Zinksalzen als Katalysatoren durchgeführt werden. Besonders bevorzugt ist die Umsetzung mit Zink-2-ethylhexanoat oder Zinkacetylacetonat.

Dem erfindungsgemäßen Verfahren zur Herstellung des PUR-Präpolymers werden 0,05 bis 10 Gew.-%, bevorzugt 0,1 bis 3 Gew.-% eines Katalysators zugesetzt. Besonders bevorzugt werden 0,2 bis 1 Gew.-% des Katalysators eingesetzt.

Es ist möglich, die Reaktion unter Normaldruck oder erhöhtem Druck, z.B. oberhalb der Normaldruck Siedetemperatur eines gegebenenfalls zugegebenen Lösemittels, wie z.B. Aceton, durchzuführen.

Geeignete Lösungsmittel sind z.B. Aceton, Butanon, Tetrahydrofuran, Dioxan, Acetonitril, Dipropylenglykoldimethylether und 1-Methyl-2-pyrrolidon, die nicht nur zu Beginn der Herstellung, sondern gegebenenfalls in Teilen auch später zugegeben werden können. Bevorzugt sind Aceton, Butanon und 1-Methyl-2-pyrrolidon.

Bei der Herstellung der erfindungsgemäßen Polyurethan-Polyharnstoff-Dispersionen können die zur Beschleunigung der Isocyanatadditionsreaktion bekannten Katalysatoren, wie z.B. Triethylamin, 1,4-Diazabicyclo-[2,2,2]-octan, Zinndioktoat oder Dibutylzinndilaurat mit vorgelegt oder später zudosiert werden. Bevorzugt ist Dibutylzinndilaurat.

Anschließend werden die gegebenenfalls zu Beginn der Reaktion noch nicht zugegebenen Bestandteile A1) bis A5), die keine primären oder sekundären Aminogruppen aufweisen, zudosiert. Bei der Herstellung des Polyurethan-Präpolymeren beträgt das Stofnnengenverhältnis von Isocyanatgruppen zu mit Isocyanat reaktiven Gruppen 0,90 bis 3, bevorzugt 0,95 bis 2, besonders bevorzugt 1,00 bis 1,8. Die Umsetzung der Komponenten A1) mit A2) bis A5) erfolgt bezogen auf die Gesamtmenge an mit Isocyanaten reaktiven Gruppen des vorgelegten Teils von A2) bis A5), der keine primären oder sekundären Aminogruppen aufweist, teilweise oder vollständig, bevorzugt aber vollständig. Der Umsetzungsgrad wird üblicherweise durch Verfolgung des NCO-Gehalts der Reaktionsmischung überwacht. Dazu können sowohl spektroskopische Messungen, z.B. Infrarot- oder Nahinfrarot-Spektren, Bestimmungen des Brechungsindex als auch chemische Analysen, wie Titrationen, von entnommenen Proben vorgenommen werden. Gegebenenfalls können die dann noch vorhandenen Isocyanatgruppen durch Reaktion mit aminischen Komponenten A4) und/oder A6) ganz oder teilweise umgesetzt werden.

Die Überführung der erfindungsgemäßen Polyurethan-Präpolymere in erfindungsgemäße PUR-Dispersionen kann nach sämtlichen, aus dem Stand der Technik bekannten Verfahren wie Emulgator-Scherkraft-, Aceton-, Präpolymer-Misch-, Schmelz-Emulgier-, Ketimin- und Feststoff-Spontan-Dispergier-Verfahren oder Abkömmlinge davon hergestellt werden. Eine Zusammenfassung dieser Methoden findet sich in Methoden der organischen Chemie (Houben-Weyl, Erweiterungs- und Folgebände zur 4. Auflage, Band E20, H. Bartl und J. Falbe, Stuttgart, New York, Thieme 1987, S. 1671 - 1682). Bevorzugt ist das Schmelz-Emulgier-, Präpolymer-Misch- und das Aceton-Verfahren.

Bedingt durch die Struktureinheit (I) im erfindungsgemäßen Polyurethan-Präpolymere wird es möglich, eine Kettenverlängerung im wässrigen Medium durchzuführen. Dadurch können bei der Herstellung der erfindungsgemäßen PUR-Präpolymere auch sehr reaktive Polyisocyanate wie aromatische Polyisocyanate und/oder 1,6-Hexamethylendiisocyanat eingesetzt werden. In diesem Fall ist es dann möglich unter den Bedingungen des Schmelz-Emulgier- oder Präpolymer-Misch-Verfahrens die Dispersionen herzustellen.

Zur Herstellung der Polyurethan-Polyharnstoff Dispersion erfolgt, nach oder während der Herstellung der erfindungsgemäßen PUR-Präpolymere aus A1) bis A5), falls dies noch nicht in den Ausgangsmolekülen durchgeführt wurde, die teilweise oder vollständige Salzbildung der anionisch und/oder kationisch dispergierend wirkenden Gruppen. Im Falle anionischer Gruppen werden dazu Basen wie Ammoniak, Ammoniumcarbonat oder -hydrogencarbonat, Trimethylamin, Triethylamin, Tributylamin, Diisopropylethylamin, Dimethylethanolamin, Diethylethanolamin, Triethanolamin, Kaliumhydroxid oder Natriumcarbonat eingesetzt, bevorzugt Triethylamin, Triethanolamin, Dimethylethanolamin oder Diisopropylethylamin. Die Stoffmenge der verwendeten Basen ergibt sich aus dem Neutralisationsgrad der anionischen Gruppen. Der Neutralisationsgrad der anionischen Gruppen liegt zwischen 50 und 120 %, bevorzugt zwischen 60 und 100 %. Im Falle kationischer Gruppen werden Schwefelsäuredimethylester, Phosphorsäure oder Bernsteinsäure eingesetzt. Werden nur nichtionisch hydrophilierte Verbindungen A4) mit Ethergruppen verwendet, entfällt der Neutralisationsschritt. Die Neutralisation kann auch gleichzeitig mit der Dispergierung erfolgen, in dem das Dispergierwasser bereits das Neutralisationsmittel enthält.

Die gegebenenfalls noch verbliebenen Isocyanatgruppen sowie die Gruppen der Formel (I) werden durch Reaktion mit aminischen Komponenten A4) und/oder A6) ganz oder teilweise umgesetzt. Diese Kettenverlängerung kann dabei entweder in Lösungsmittel vor dem Dispergieren oder in Wasser nach dem Dispergieren durchgeführt werden. Sind aminische Komponenten A4) enthalten, erfolgt die Kettenverlängerung bevorzugt vor der Dispergierung.

Die aminische Komponente A4) und/oder aminische Komponente A6) kann mit organischen Lösungsmitteln und/oder mit Wasser verdünnt dem Reaktionsgemisch zugegeben werden. Bevorzugt werden 70 bis 95 Gew.-% Lösungsmittel und/oder Wasser eingesetzt. Sind mehrere aminische Komponenten vorhanden, so kann die Umsetzung nacheinander in beliebiger Reihenfolge oder gleichzeitig durch Zugabe einer Mischung erfolgen.

Zwecks Herstellung der erfindungsgemäßen Polyurethan-Polyhamstoff-Dispersion werden die erfindungsgemäßen Polyurethan-Präpolymere, gegebenenfalls unter starker Scherung, wie z.B. starkem Rühren, entweder in das Dispergierwasser eingetragen oder umgekehrt das Dispergierwasser zu den Präpolymeren gerührt. Anschließend erfolgt dann, falls noch nicht in der homogenen Phase geschehen, die Molmassenerhöhung durch Reaktion von gegebenenfalls vorhandenen Isocyanatgruppen, aber auch der im Präpolymer vorhandenen Gruppe der Formel (I) mit kettenverlängerenden Mittel A4) und/oder A6). Die eingesetzte Menge an Polyamin A6) hängt von den noch vorhandenen, nicht umgesetzten Isocyanatgruppen und der Menge der Gruppen der Formel (I) ab. Bevorzugt werden 50 bis 100 %, besonders bevorzugt 75 bis 95 % der Stoffmenge der Isocyanatgruppen und gegebenenfalls 10 bis 100 % der Formel (I) entsprechenden Gruppen mit Polyaminen A6) umgesetzt.

Gegebenenfalls kann das organische Lösungsmittel abdestilliert werden. Die Dispersionen haben einen Festkörpergehalt von 10 bis 70 Gew.-%, bevorzugt 20 bis 60 Gew.-%.

Gegenstand der Erfindung ist schließlich auch ein Verfahren zur Herstellung von Beschichtungen, dadurch gekennzeichnet, dass die erfindungsgemäßen Polyurethandispersionen allein oder in Kombination mit Härtern und/oder in Wasser dispergierbare, emulgierbare oder lösliche und dispergiert vorliegende Polymere, z.B. als Bindemittel, Schlichten oder Beschichtungsmittel, eingesetzt werden.

In Wasser dispergierbare, emulgierbare oder lösliche und dispergiert vorliegende Polymere sind beispielsweise Polyesterpolymere oder Epoxidgruppen enthaltende Polyesterpolymere, Polyurethane, Acrylpolymere, Vinylpolymere wie Polyvinylacetat, Polyurethandispersionen, Polyacrylatdispersionen, Polyurethan-Polyacrylat-Hybriddispersionen, Polyvinylether- bzw. Polyvinylesterdispersionen, Polystyrol- bzw. Polyacrylnitrildispersionen, die sowohl in Mischungen als auch in Kombination mit weiteren blockierten Polyisocyanaten und Aminovernetzerharzen wie z.B. Melaminharzen verwendet werden können. Der Feststoffgehalt der Harze beträgt bevorzugt 10 bis 100 Gew.-% besonders bevorzugt 30 bis 100 Gew.-%.

Die erfindungsgemäßen Polyurethandispersionen gegebenenfalls in Kombination mit weiteren wässrigen Bindemitteln, Härtern oder Klebstoffen, können über beliebige Methoden auf ein geeignetes Substrat appliziert werden, beispielsweise mit Hilfe geeigneter Vorrichtungen, wie z.B. Sprüh- oder Walzapplikatoren. Geeignete Substrate sind beispielsweise ausgewählt aus der Gruppe Metall, Holz, Glas, Glasfasern, Kohlefasern, Stein, keramische Mineralien, Beton, harte und flexible Kunststoffe der verschiedensten Arten, gewebten und nicht gewebten Textilien, Leder, Papier, Hartfasern, Stroh und Bitumen die vor der Beschichtung gegebenenfalls auch mit üblichen Grundierungen versehen werden können. Bevorzugte Substrate sind Kunststoffe, Glasfasern, Kohlefasern, Metalle, Textilien und Leder.

Sowohl die erfindungsgemäßen PUR-Präpolymere, als auch die daraus herstellbaren Polyurethan-Polyharnstoff-Dispersionen können zur Herstellung von Lacken, Schlichten oder Klebstoffen verwendet werden.

Gegenstand der vorliegenden Erfindung sind Beschichtungsmittel, enthaltend die erfindungsgemäßen Polyurethandispersionen.

Gegenstand der vorliegenden Erfindung sind darüber hinaus Substrate beschichtet mit Beschichtungsmitteln, enthaltend die erfindungsgemäßen PUR-Dispersionen.

### Beispiele

### Eingesetzte Produkte:

- Polyol 1:: difunktioneller Polyether auf Propylenoxidbasis mit einer OH-Zahl von 263 mg KOH/g und einem mittleren Molekulargewicht von 426 (Polyethersulfonat, Bayer Espania, S. A., Barcelona, ES)
- Polyol 2:: Polyester aus Adipinsäure, 1,6 Hexandiol und Neopentylglykol, mit einem Molekulargewicht von 1700 g/mol, einer OH-Zahl von 66 und einem Gewichtsverhältnis von Hexandiol und Neopentylglykol ca. 1,6 zu 1
- Polyol 3:: Polyester auf der Basis von Adipinsäure und 1,6-Hexandiol, OH-Zahl 47 mg KOH/g Substanz, Molgewicht 2387 g/mol
- Polyol 4:: n-Butanol gestarteter monofunktioneller Polyether auf Ethylenoxid-/Propylenoxidbasis (ca. 85:15) mit einem mittleren Molgewicht von 2250 und einer OH-Zahl von 25
- Polyol 5:: Hexandiolpolycarbonatdiol der OH-Z = 56 (Desmophen^{®} 2020, Bayer AG, Leverkusen, DE)
- Polyol 6:: Polypropylenoxiddiol der OH-Z = 56 (Desmophen^{®} 3600, Bayer AG, Leverkusen, DE)
- Polyol 7:: Polypropylenoxiddiol der OH-Z = 200 (Desmophen^{®} L400, Bayer AG, Leverkusen, DE)
- Polyol 8:: Polypropylenoxidtriol der OH-Z = 56 (Baygal^{®} 70RE30, Bayer AG, Leverkusen, DE)
- Polyisocyanat 1:: 1-Isocyanato-3,3,5-trimethyl-5-isocyanatomethyl-cyclohexan (Isophorondiisocyanat) (Desmodur^{®} I, Bayer AG, Leverkusen, DE)
- Polyisocyanat 2:: 1,6-Hexamethylendiisocyanat (Desmodur^{®} H, Bayer AG, Leverkusen, DE)
- Polyisocyanat 3:: 4,4'-Diisocyanatodieyclohexylmethan (Desmodur^{®} W, Bayer AG, Leverkusen, DE)
- Polyisocyanat 4:-: 4,4'-Methylen-diphenyldiisocyanat (Desmodur^{®} 44M, Bayer AG, Leverkusen, DE)
- Polyisocyanat 5:: 2,4 Toluylendiisocyanat (Desmodur^{®} T 100, Bayer AG, Leverkusen, DE)
- Amin 1:: Alkylamin (Imprafix^{®} VP LS 2330, Bayer AG, Leverkusen, DE)
- Amin 2:: 45 %ige wässrige Lösung des Natriumsalzes von 2-(2-Aminoethylamino-)ethansulfonsäure (AAS-Lösung, Bayer AG, Leverkusen, DE)

Die mittlere Teilchengröße (MTG) wurde nach DIN ISO 13320-1 bestimmt durch Laser-Korrelations-Spektroskopie mit einem Malvern Zetamaster 1000.

### Beispiel 1

In einem 500 mL Dreihalskolben mit Rückflusskühler wurden 29,84 g Polyol 3, 8,71 g Polyol 1 und 8,41g 1,6-Hexandiol aufgeschmolzen und eine Stunde lang bei 110°C entwässert. Bei 80°C wurden dann 22,54 g N-Methylpyrrolidon (NMP) zugegeben und 25,82 g Polyisocyanat 5 innerhalb von 30 Minuten bei konstanter Temperatur (80°C) unter Kühlung zugetropft. Nach ca. 10 Minuten Nachrührzeit wurde der theoretische NCO-Gehalt von 3,88 % um 1/10 unterschritten. Es wurde auf 50°C abgekühlt. Daraufhin wurden 0,073 g Zink-2-ethylhexanoat eingerührt und 13,76 g Cyclopentanon-2-carboxyethylester (156,2 g/mol) zugegeben. Man ließ bei 70°C solange rühren, bis durch Titration keine NCO-Gruppen mehr nachweisbar sind (ca. 3 Stunden). Anschließend wurden unter heftigem Rühren innerhalb von 10 Minuten 217,79 g auf 40°C temperiertes Wasser zu der 70°C warmem Harzlösung gegeben. Nach 5 Minuten wurde eine Kettenverlängerungslösung, bestehend aus 10 g Wasser, 1,05 g 1,5-Diamino-2-methylpentan und 0,75 g Hydrazinhydrat (50 g/mol) innerhalb von 5 Minuten zu der Dispersion getropft. Nach Abkühlen auf 30°C wurde durch ein Seitz T5500-Filter filtriert.

MTG (mittlere Teilchengröße)= 122 nm.

### Beispiel 2

In einem 500 mL Dreihalskolben mit Rückflusskühler wurden 29,84 g Polyol 3, 8,71 g Polyol 1 und 8,41 g 1,6-Hexandiol aufgeschmolzen und eine Stunde bei 110°C entwässert. Bei 80°C wurden 22,54 g NMP zugegeben und 25,82 g Polyisocyanat 5 langsam bei konstanter Temperatur zugetropft. Es erfolgte eine exotherme Reaktion. Nach cä. 30 Minuten war das Zutropfen abgeschlossen. Nach weiteren 10 Minuten Nachrührzeit war der theoretische NCO-Gehalt von 3,88 % um 1/10 unterschritten. Es wurde auf 50°C abgekühlt, bevor 0,073 g Zink-2-ethylhexanoat eingerührt und dann 13,76 g Cyclopentanon-2-carboxyethylester (156,2 g/mol) zugegeben wurden. Man ließ bei 70°C solange rühren, bis kein NCO-Gehalt mehr nachweisbar war (ca. 3 Stunden). Anschließend wurden unter heftigem Rühren innerhalb von 10 Minuten 217,79 g auf 40°C temperiertes Wasser zu der 70°C warmem Harzlösung gegeben. Nach 5 Minuten wurde zu der Dispersion eine Kettenverlängerungslösung aus 10 ml Wasser, 0,63 g 1,5-Diamino-2-methylpentan und 0,50 g Hydrazinhydrat zugegeben. Nach Abkühlen auf 30°C wurde durch ein Seitz T5500-Filter filtriert.

MTG = 146 nm

### Beispiel 3

In einem 500 mL Dreihalskolben mit Rückflusskühler wurden 34,61 g Polyol 3, 7,84 g Polyol 1 und 8,41 g 1,6-Hexandiol aufgeschmolzen und eine Stunde bei 110°C entwässert. Bei 80°C wurden 22,54 g NMP zugegeben und 24,27 g Polyisocyanat langsam zugetropft. Es erfolgte eine exotherme Reaktion. Nach ca. 30 Minuten war das Zutropfen abgeschlossen. Nach weiteren 10 Minuten Nachrührzeit war der theoretische NCO-Gehalt von 2,97% um 1/10 unterschritten. Es wurde auf 50°C abgekühlt. Dann wurden 0,075 g Zink-2-ethylhexanoat eingerührt und 11,01 g Cyclopentanon-2-carboxyethylester (156,2 g/mol) zugegeben. Man ließ bei 70°C ca. 3 Stunden bis vollständigen Umsetzung der NCO-Gruppen rühren. Dann wurde durch Zugabe von 217,79 g Wasser (ca. 40°C) zum Harz unter heftigem Rühren dispergiert und nach 5 Minuten mit einer Kettenverlängerungslösung aus 10 ml Wasser und 3,16 g 1,5-Diamino-2-methylpentan und 0,60 g Hydrazinhydrat (50 g/mol) verlängert. Nach Abkühlen auf 30 °C wurde durch ein Seitz T5500-Filter filtriert.

MTG =103 nm

### Beispiele 4

In einem 500 mL Dreihalskolben mit Rückflusskühler wurden 34,61 g Polyol 3, 7,84 g Polyol 1 und 8,41 g 1,6-Hexandiol aufgeschmolzen und eine Stunde bei 110°C entwässert. Bei 80°C wurden 22,54 g NMP zugegeben und 24,27 g Polyisocyanat 5 langsam zugetropft. Es erfolgte einen exotherme Reaktion. Nach ca. 30 Minuten war das Zutropfen abgeschlossen. Nach ca. 10 Minuten Nachrührzeit war der theoretische NCO-Gehalt von 2,97% um 1/10 unterschritten. Es wurde auf 50°C abgekühlt. Es wurden 0,075 g Zink-2-ethylhexanoat eingerührt und 11,01 g Cyclopentanon-2-carboxyethylester (156,2 g/mol) zugegeben. Man ließ bei 70°C ca. 3 Stunden rühren, bis keine NCO-Gruppen mehr nachgewiesen wurden. Dann wurde mit 217,79 g warmem Wasser (ca. 40°C) dispergiert. Anschließend wurde mit einer Kettenverlängerungslösung aus 10 ml Wasser, 2,38 g 1,5-Diamino-2-methylpentan und 0,50 g Hydrazinhydrat (50 g/mol) verlängert. Nach Abkühlen auf 30°C wurde durch ein Seitz T5500-Filter filtriert.

MTG = 115 nm

Die Beispiele 1-4 belegen die problemlose Herstellbarkeit von aromatischen Polyurethandispersionen nach dem Präpolymer-Misch-Verfahren.

### Beispiel 5

In einem 500 mL Dreihalskolben mit Rückflusskühler wurden 34,61 g Polyol 3, 7,84 g Polyol 1 und 8,41 g 1,6-Hexandiol aufgeschmolzen und eine Stunde bei 110°C entwässert. Bei 80°C wurden 24,43 g NMP zugegeben und 30,97 g Polyisocyanat 1 innerhalb von 30 Minuten zugetropft. Die dabei auftretende Exothermie wurde durch Kühlung abgefangen. Nach ca. 14 Stunden Nachrührzeit war der theoretische NCO-Gehalt von 2,77 % um 1/10 unterschritten. Es wurde auf 50°C abgekühlt und 0,082 g Zink-2-ethylhexanoat wurden eingerührt bevor 10,93 g Cyclopentanon-2-carboxyethylester (156,2 g/mol) zugegeben wurden. Man ließ bei 70°C ca. 16 Stunden rühren, bis kein NCO mehr nachweisbar war. Anschließend wurde mit 234,44 g warmem Wasser (40°C) dispergiert. Nach 5 Minuten wurde mit einer Kettenverlängerungslösung aus 10 ml Wasser 3,14 g 1,5-Diamino-2-methylpentan (116g/mol) und 0,60 g (0,024 val) Hydrazinhydrat (50 g/mol) verlängert. Nach Abkühlen auf 30 °C wurde durch ein Seitz T5500-Filter filtriert.

MTG = 104 nm.

### Beispiel 6

In einem 500 mL Dreihalskolben mit Rückflusskühler wurden 34,61 g Polyol 3, 7,84 g Polyol 1 und 8,41 g 1,6-Hexandiol aufgeschmolzen und eine Stunde bei 110°C entwässert. Bei 80°C wurden 24,43 g NMP zugegeben und 30,97 g Polyisocyanat 1 innerhalb von 30 Minuten zugetropft. Die Exothermie wurde durch Kühlung abgefangen. Nach ca. 14. Stunden Nachrührzeit war der theoretische NCO-Gehalt von 2,77 % um 1/10 unterschritten. Es wurde auf 50°C abgekühlt und 0,082 g Zink-2-ethylhexanoat wurden eingerührt und dann 10,93 g Cyclopentanon-2-carboxyethylester (156,2 g/mol) zugegeben. Man ließ bei 70°C so lange rühren, bis kein NCO mehr nachweisbar war (ca. 16 Stunden). Dann wurden 234,44 g auf 40°C temperiertes Wasser unter heftigem Rühren in 5 Minuten zum Harz gegeben. Anschließend wurde mit einer Kettenverlängerungslösung aus 10 ml Wasser, 2,40 g 1,5-Diamino-2-methylpentan und 0,50 g Hydrazinhydrat (50 g/mol) verlängert. Nach Abkühlen auf 30 °C wurde durch ein Seitz T5500-Filter filtriert.

MTG = 102 nm

### Beispiel 7

In einem 500 mL Dreihalskolben mit Rückflusskühler wurden 34,61 g Polyol 3, 7,84 g Polyol 1 (212 g/mol) und 8,41 g 1,6-Hexandiol aufgeschmolzen und eine Stunde bei 110°C entwässert. Bei 80°C wurden 24,43 g NMP zugegeben und 38,91 g Polyisocyanat 3 innerhalb von 30 Minuten zugetropft. Nach ca. 72 Stunden Nachrührzeit war der theoretische NCO-Gehalt von 3,24% unterschritten. Es wurde auf 50°C abgekühlt, 0,09 g Zink-2-ethylhexanoat wurden eingerührt bevor 13,75 g Cyclopentanon-2-carboxyethylester zugegeben wurden. Man ließ bei 70°C ca. 30 Stunden rühren, bis kein NCO mehr nachweisbar war. Danach wurden innerhalb von 5 Minuten 251,98 g auf 40°C temperiertes Wasser unter heftigem Rühren addiert. Im Anschluss daran wurde mit einer Kettenverlängerungslösung aus 10 ml Wasser, 3,95 g 1,5-Diamino-2-methylpentan und 0,75 g Hydrazinhydrat (50 g/mol) zugegeben. Nach Abkühlen auf 30 °C wurde durch ein Seitz T5500-Filter filtriert.

MTG =120 nm

### Beispiel 8

In einem 500 mL Dreihalskolben mit Rückflusskühler wurden 34,61 g Polyol 3, 7,84 g Polyol 1 und 8,41 g 1,6-Hexandiol aufgeschmolzen und eine Stunde bei 110°C entwässert. Bei 80°C wurden dann 24,43 g NMP zugegeben und 38,91 g Polyisocyanat 3 innerhalb von 30 Minuten zugetropft. Nach ca. 72 Stunden Nachrührzeit war der theoretische NCO-Gehalt von 3,24% um 1/10 unterschritten. Es wurde auf 50°C abgekühlt. Es wurden 0,09 g Zink-2-ethylhexanoat eingerührt und 13,75 g Cyclopentanon-2-carboxyethylester (156,2 g/mol) zugegeben. Man ließ bei 70°C ca. 30 Stunden bis zur NCO-Freiheit rühren. Danach wurden 251,98 g auf 40°C temperiertes Wasser unter heftigem Rühren addiert. Im Anschluss daran wurde eine Kettenverlängerungslösung bestehend aus 10 ml Wasser, 2,41 g 1,5-Diamino-2-methylpentan und 0,51 g Hydrazinhydrat (50 g/mol) innerhalb von 5 Minuten addiert. Nach Abkühlen auf 30°C wurde durch ein Seitz-T5500-Filter filtriert.

MTG = 116 nm

### Beispiel 9

In einem 11 Vierhalskolben mit Innenthermometer und Tropftrichter wurden -50,1 g Polyol 3 zusammen mit 4,6 g DMPS (Dimethylolpropionsäure, Fa. Perstorp Chemicals GmbH, Arnsberg, Deutschland) und 14,1 g Hexandiol-1,6 bei 100°C vorgelegt und 1 Stunde bei einem Druck von kleiner 5 mbar entwässert. Anschließend wurde die Apparatur mit Stickstoff belüftet und die Stickstoffatmosphäre während der ganzen Reaktionsdauer beibehalten. Das Reaktionsgemisch wurde mit 33,0 g NMP (N-Methylpyrrolidon) versetzt und auf 85°C erhitzt. Zu dieser Mischung wurden 55,4 g Polyisocyanat 1 zugeben. Es wurde bei 85°C weiter gerührt bis der NCO-Wert von 3,90 % der Lösung leicht unterfahren war (Reaktionszeit ca. 3 Stunden). Das entstandene Präpolymer wurde auf 65°C abgekühlt, danach wurden 0,151 g Zink-2-ethylhexanoat hinzu gesetzt und 23,2 g Cyclopentanon-2-carboxyethylester (156,2 g/mol) vorsichtig zugetropft, so dass die Reaktionstemperatur nicht über 70°C steigt. Bei 70°C ließ man bis auf einen NCO-Wert von Null rühren und gab dann 3,5 g Triethylamin hinzu. Man ließ 10 Minuten nachrühren und dispergierte dann durch Zugabe von 207,9 g Wasser, das zuvor auf 40°C erwärmt wurde. Die Dispersion wurde homogen verrührt, danach wurde eine 10%ige Lösung von 3,5 g 1,5-Diamino-2-methylpentan und 0,9 g Hydrazinhydrat (Äquivalentgewicht 50 g/mol) in Wasser innerhalb von 30 Minuten zugetropft. Nach Abkühlen auf 30°C wurde durch ein Seitz T5500-Filter filtriert.

MTG = 211 nm

### Beispiel 10

263,5 g des Polyol 2 und 65,7 g Polyol 1 wurden in einem Vier-Hals-Kolben vorgelegt und bei 100°C im Vakuum für 1 Stunde entwässert. Auf die entwässerte Mischung wurden 165,4 g N-Methylpyrrolidon und 62,9 g Neopentylglykol gegeben. Die entstandene Mischung wurde bei 70°C homogenisiert, auf 60°C abgekühlt und schnell mit 206,4 g Polyisocyanat 2 versetzt. Unter Ausnutzung der Exothermie wurde solange bei 80°C gerührt, bis der theoretische NCO-Gehalt von 3,6 % erreicht war. Dann wurde auf 50°C abgekühlt, 0,7 g Zinkacetylacetonat wurden zugesetzt und 5 Minuten homogenisiert. Im Anschluss daran wurden bei 50°C 103,6 g Cyclopentanon-2-carboxyethylester zugegeben und es wurde solange bei 65°C gerührt, bis kein NCO mehr nachweisbar war. 750 g der Harzschmelze wurden unter heftigem Rühren innerhalb von 5 Minuten zu 870 g bei 40°C temperierten Wasser gegeben. Nachdem die entstandene feinteilige Dispersion 5 Minuten bei Mischtemperatur nachgerührt wurde, erfolgte die Kettenverlängerung durch Zugabe einer wässrigen Lösung bestehend aus 2,2 g Ethylendiamin, 4,3 g 1,5-Diamino-2-methyl-pentan und 58.5 g Wasser. Während der Aminzugabe konnte eine Zunahme der Teilchengröße beobachtet werden. Nach zwei Stunden wurde auf Raumtemperatur abgekühlt und filtriert.

MTG: 280 nm

pH-Wert (10%ige wässrige Lösung): 6,6

Viskosität: 52 mPas

Beispiel 10 belegt, dass aus auf 1,6-Diisocyanatohexan basierten hydrophilierten Präpolymeren problemlos stabile Polyurethandispersionen nach dem Präpolymer-Misch- bzw. inversen Präpolymer-Misch-Verfahren hergestellt werden können.

### Beispiel 11

2000,0 g Polyol 5, 1200,0 g Polyol 8 und 300,0 g Polyol 4 wurden 1 Stunde bei 120°C und 15 mbar entwässert. Bei 90°C wurden 744,0 g Polyisocyanat 1 zugegeben. Die Mischung wurde bei 90 bis 100°C gerührt, bis ein konstanter Isocyanatgehalt von 3,3 % erreicht war. Das Reaktionsgemisch wurde auf 50°C abgekühlt und 250,0 g Cyclopentanon-2-carboxy-ethylester und 5,0 g Zn(2-Ethyl-)hexanoat zugegeben. Nach 6 h wurde das Reaktionsprodukt mit 4000,0 g Aceton verdünnt und auf 40°C abgekühlt.

Innerhalb von 5 Minuten wurden 650,0 g einer 30%ige Lösung eines Adduktes aus 1-Mol Acrylsäure und 1 mol 1-Amino-3,3,5-trimethyl-5-aminomethyl-cyclohexan (Isophorondiamin) und anschließend 71,0 g Triethylamin in 400,0 g Wasser zugegeben. 15 Minuten nach vollständiger Zugabe der Aminlösungen wurden unter kräftigem Rühren 7250,0 g entionisiertes Wasser zugegeben. Unter vermindertem Druck wurde das Aceton bei 40 bis 50°C Sumpftemperatur abdestilliert.

Es wurde eine feinteilige Dispersion mit einem Feststoffgehalt von 39,5 Gew.-%, pH = 6,5 und einer Auslaufzeit (gemäß DIN 53 211, 4 mm Düse) von 16 Sekunden erhalten.

### Beispiel 12

800,0 g Polyol 6, 1100,0 g Polyol 5, 1100,0 Polyol 8 und 225,0 g Polyol 4 wurden 1 Stunde bei 120°C und 15 mbar entwässert. Bei 65°C wurden 765,0 g Polyisocyanat 4 zugegeben. Die Mischung wurde bei 75 bis 85°C gerührt, bis ein konstanter Isocyanatgehalt von 2,9 % erreicht wurde. Das Reaktionsgemisch wurde mit 5000 g Aceton verdünnt und auf 40°C abgekühlt. In die Lösung wurden 235,0 g Cyclopentanon-2-carboxy-ethylester und 5,0 g Zn(2-Ethyl-)hexanoat gegeben. Nach 3 h bei 40 bis 50°C wurde das Reaktionsprodukt innerhalb von 5 Minuten mit 570,0 g einer 30%ige Lösung eines Adduktes aus 1 Mol Acrylsäure und 1 mol 1-Amino-3,3,5-trimethyl-5-aminomethyl-cyclohexan (Isophorondiamin) und anschließend 41,0 g Triethylamin in 400,0 g Wasser versetzt. 15 Minuten nach vollständiger Zugabe der Aminlösungen wurden unter kräftigem Rühren 5150,0 g entionisiertes Wasser zugegeben. Unter vermindertem Druck wurde das Aceton bei 40 bis 50°C Sumpftemperatur abdestilliert.

Es wurde eine feinteilige Dispersion mit einem Feststoffgehalt von 44,5 Gew.-%, pH = 6,9 und einer Auslaufzeit (gemäß DIN 53 211, 4 mm Düse) von 55 Sekunden erhalten.

### Beispiel 13

275,4 g Polyol 2 und 12,2 g Polyol 4 wurden 1 Stunde bei 120°C und 15 mbar entwässert. Bei 65°C wurden 31,0 g Polyisocyanat 2 und 41,0 g Polyisocyanat 1 zugegeben. Die Mischung wurde bei 105°C gerührt, bis ein konstanter Isocyanatgehalt von 4,3 % erreicht wurde. Das Reaktionsgemisch wurde mit 374,2 g Aceton verdünnt und auf 50°C abgekühlt. Anschließend wurde eine Lösung aus 4,5 g Hydrazinhydrat, 9,2 g Isophorondiamin und 79,8 g Aceton innerhalb von 10 min zudosiert. Nach Zugabe von 11,4 g Amin 2 innerhalb von 5 min wurde weitere 5 min gerührt und 0,4 g Zink-2-ethylhexanoat und 27,8 g Cyclopentanon-2-carboxyethylester zugegeben. Nach einer Nachrührphase von 5 min wurden unter kräftigem Rühren 598,9 g entionisiertes Wasser zugegeben. Unter vermindertem Druck wurde das Aceton bei 40 bis 50°C Sumpftemperatur abdestilliert.

Es wurde eine feinteilige Dispersion mit einem Feststoffgehalt von 40,0 Gew.-% und einem pH Wert von 6,4 erhalten.

Die Beispiele 11-13 belegen die Anwendbarkeit des Verfahrens auf acetonische Polyurethandispersionen.

### Beispiel 14

126,9 g Polyol 6, 25,2 g Polyol 7 und 85,1 g Polyol 4 wurden 1 Stunde bei 120°C und 15 mbar entwässert. Bei 70°C wurden 98,6 g Polyisocyanat 3 zugegeben. Die Mischung wurde bei100°C 45 min gerührt. Nach Abkühlung auf 65 °C wurden 5,1 g Trimethylolpropan, 0,25 g Zink-2-ethylhexanoat und 20,3 g Cyclopentanon-2-carboxyethylester bis ein konstanter Isocyanatgehalt von 2,7 % erreicht wurde. Das Reaktionsgemisch wurde anschließend auf 60°C abgekühlt und durch Zugabe von 517,4 g entionisiertes Wasser innerhalb von 10 min dispergiert. Zur Kettenverlängerung wurde eine Lösung aus 1,7 g Hydrazinhydrat, 11,4 g Isophorondiamin und 175,9 g entionisiertes Wasser innerhalb von 2 min zugegeben.

Nach einer Nachrührphase von 3 h wurde eine feinteilige Dispersion mit einem Feststoffgehalt von 33,2 Gew.-% und einem pH-Wert von = 5,51 erhalten.

## Patentansprüche

1. Hydrophile Polyurethan(PUR)-Präpolyrnere, enthaltend ein Polymergerüst
mit Struktureinheiten der Formel (I), 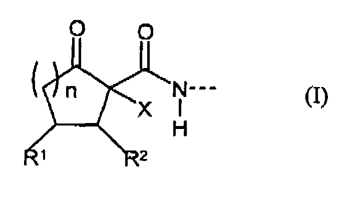 in welcher
R¹ und R² unabhängig voneinander die Reste H, C₁-C₂₀-(Cyclo)alkyl, C₆-C₂₄-Aryl, C₁-C₂₀-(Cyclo)alkylester oder -amid, C₆-C₂₄-Arylester oder -amid, gemischt aliphatisch/aromatische Reste mit 1 bis 24 Kohlenstoffatomen sind, die auch Teil eines 4- bis 8-gliedrigen Ringes sein können,
X eine elektronenziehende Gruppe,
n eine ganze Zahl von 0 bis 5 ist und
mit Struktureinheiten polymerer Polyole des mittleren Molekulargewichtsbereichs von 400 bis 6000,
wobei das Polymergerüst über ionische bzw. potientiell ionische und/oder nichtionisch hydrophilierend wirkende Gruppen verfügt.

2. Wässrige Polyurethan-Polyharnstoff Dispersionen, enthaltend die allgemeine Struktureinheit (II), 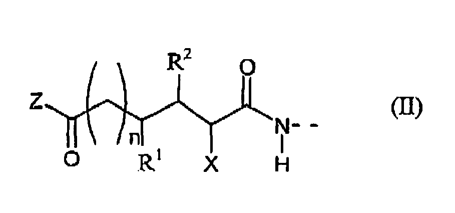 in welcher
R¹ und R² unabhängig voneinander die Reste H, C₁-C₂₀-(cyclo)alkyl, C₆-C₂₄-Aryl, C₁-C₂₀-(Cyclo)alkylester oder -amid, C₆-C₂₄-Arylester oder -amid, gemischt aliphatisch/aromatische Reste mit 1 bis 24 Kohlenstoffatomen sind, die auch Teil eines 4- bis 8-gliedrigen Ringes sein können,
X eine elektronenziehende Gruppe ist,
Z für OH, OR³ oder NR⁴R⁵ steht, wobei
R³ ein C₁-C₂₀-(Cyclo)alkyl-Rest, C₂-C₁₈-Alkenyl-Rest, C₅-C₈-Cycloalkenyl-Rest, C₂-C₁₈-Alkinyl-Rest, C₆-C₂₄-Aryl-Rest, C₁-C₂₀-(Cyclo)alkylester- oder -amid-Rest, C₆-C₂₄-Arylester- oder -amid-Rest, C₃-C₁₂-Heterocycloalkyl-Reste, die unsubstituiert oder substituiert mit NO₂-, Amine-, Cyan-, Carboxy-, Ester, Keto- oder Aldehydgruppen vorliegen können,
R⁴/R⁵ unabhängig voneinander die Reste H, C₁-C₂₀-(Cyclo)alkyl, C₂-C₁₈-Alkenyl, C₅-C₈-Cycloalkenyl, C₂-C₁₈-Alkinyl, C₆-C₂₄-Aryl, C₁-C₂₀-(Cyclo)alkylester oder -amid, C₆-C₂₄-Arylester oder -amid, C₃-C₁₂-Heterocycloalkyl-Reste, die unsubstituiert oder substituiert mit NO₂-, Amino-, Cyano-, Carboxy-, Ester,
Keto- oder Aldehydgruppen vorliegen können und R⁴ und R⁵ gemeinsam mit dem N-Atom einen C₃-C₁₂-Cycloalkyl- oder ein C₃-C₁₃-Heterocycloalkyl-Rest, enthaltend O-, S- oder N-Atome, bilden können,
und/oder die allgemeine Struktureinheit (III), 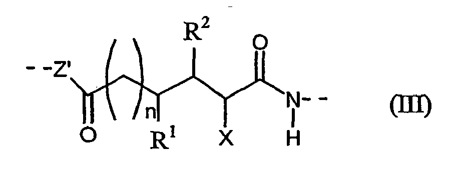 in welcher
R¹, R² und X die vorangenannte Bedeutung haben und
Z' -für ein verbrückendes O- oder verbrückendes sekundäres oder tertiäres N-Atom steht und
n eine ganze Zahl von 0 bis 5 ist.

3. Verfahren zur Herstellung der wasserdispergierbaren oder wasserlöslichen Polyurethan-Präpolymere gemäß Anspruch 1, **dadurch gekennzeichnet, dass**
A1) mindestens ein Polyisocyanat mit aliphatisch, cycloaliphatisch, araliphatisch und/oder aromatisch gebundenen Isocyanatgruppen mit
A2) polymeren Polyolen des mittleren Molgewichtsbereichs von 400 bis 6000,
A3) gegebenenfalls einem oder mehreren mehrwertigen Alkoholen mit 1 bis 4 Hydroxylgruppen des Molekulargewichtsbereichs bis 400,
A4) mindestens einer ionischen und/oder potentiell ionischen und/oder nichtionischen hydrophilen Verbindung mit gegenüber NCO-Gruppen reaktiven Gruppen,
A5) mindestens einem CH-aziden cyclischen Keton der allgemeinen Formel (IV), 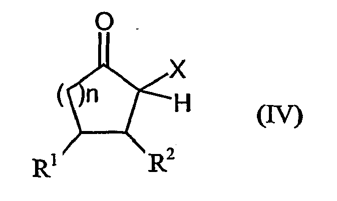 in welcher
X eine elektronenziehende Gruppe,
R¹ und R² unabhängig voneinander die Reste H, C₁-C₂₀-(Cyclo)alkyl, C₆-C₂₄-Aryl, C₁-C₂₀-(Cyclo)alkylester oder -amid, C₆-C₂₄-Arylester oder -amid, gemischt aliphatisch/aromatische Reste mit 1 bis 24 Kohlenstoffatomen sind, die auch Teil eines 4- bis 8-gliedrigen Ringes sein können, darstellen,
n eine ganze Zahl von 0 bis 5 ist und mit
(-A6) gegebenenfalls einem oder mehreren (cyclo)aliphatischen Mono- oder Polyaminen oder Aminoalkoholen mit 1 bis 4 Aminogruppen des Molekulargewichtsbereichs bis 400,
in Gegenwart eines Katalysators und gegebenenfalls in Gegenwart gegenüber Isocyanaten inerten organischen Lösemitteln umgesetzt werden, wobei das Stoffmengenverhältnis von Isocyanatgruppen zu gegenüber Isocyanatgruppen reaktiven Gruppen von 0,5 bis 3 beträgt.

4. Verfahren gemäß Anspruch 3, **dadurch gekennzeichnet, dass** polymere Polyole (A2) Polyester-, Polyether- oder Polycarbonatpolyole sind.

5. Verfahren gemäß Anspruch 4, **dadurch gekennzeichnet, dass** Polyetherpolyole aus weniger als 30 mol-% Ethylenoxideinheiten bestehen.

6. Verfahren zur Herstellung wässriger Polyurethan-Polyharnstoff-Dispersionen, **dadurch gekennzeichnet, dass** das PUR-Prepolymer, enthaltend ein Polymergerüst mit Struktureinheiten der Formel (I), 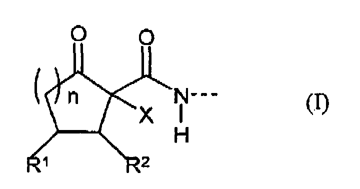 in welcher
R¹ und R² unabhängig voneinander die Reste H, C₁-C₂₀-(Cyclo)alkyl, C₆-C₂₄-Aryl, C₁-C₂₀-(Cyclo)alkylester oder -amid, C₆-C₂₄-Arylester oder -amid, gemischt aliphatisch/aromatische Reste mit 1 bis 24 Kohlenstoffatomen sind, die auch Teil eines 4- bis 8-gliedrigen Ringes sein können und
X eine elektronenziehende Gruppe,
n eine ganze Zahl von 0 bis 5 ist,
sowie mit Struktureinheiten polymerer Polyols des mittleren Molgewichtsbereichs von 400 bis 6000, wobei das Polymergerüst über ionische bzw. potientiell ionische und/oder nichtionisch hydrophilierend wirkende Gruppen verfügt, in die wässrige Phase überführt wird und im Falle der ionischen oder potentiell ionischen Gruppen diese vorher oder gleichzeitig teilweise oder vollständig neutralisiert werden, wobei vor oder nach der Dispergierung eine Kettenverlängerung mit aminischen Komponenten (A4) und/oder (A6) erfolgt.

7. Verfahren zur Herstellung von Beschichtungen, **dadurch gekennzeichnet, dass** wässrige Polyurethan-Polyharnstoff-Dispersionen gemäß Anspruch 2 allein oder in Kombination mit Härtern und/oder in Wasser dispergierbare, emulgierbare oder lösliche und dispergiert vorliegende Polymere eingesetzt werden.

8. Beschichtungsmittel, enthaltend Polyurethan-Polyharnstoff-Dispersionen gemäß Anspruch 2.

9. Substrate beschichtet mit Beschichtungsmitteln, enthaltend Polyurethan-Polyharnstoff-Dispersionen gemäß Anspruch 2.

10. Verwendung der Polyurethan-Präpolymere gemäß Anspruch 1 zur Herstellung von Lacken, Schlichten oder Klebstoffen.

11. Verwendung der wässrigen Polyurethan-Polyhamstoff-Dispcrsionen gemäß Anspruch 2 zur Herstellung von Lacken, Schlichten oder Klebstoffen.

## Claims

1. Hydrophilic polyurethane (PU) prepolymers comprising a polymer backbone with structural units of formula (I), 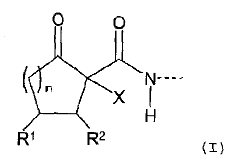 in which
R¹ and R² independently of one another are the radicals H, C₁-C₂₀-(cyclo)alkyl, C₆-C₂₄-aryl, C₁-C₂₀-(cyclo)alkyl ester or amide, C₆-C₂₄-aryl ester or amide, mixed aliphatic/aromatic radicals having 1 to 24 carbon atoms, which may also be part of a 4- to 8-membered ring, and
X is an electron-withdrawing group,
n is an integer from 0 to 5,
and also having structural units of polymeric polyols from the average molecular weight range from 400 to 6000,
the polymer backbone possessing ionic or potentially ionic and/or nonionically hydrophilicizing groups.

2. Aqueous polyurethane-polyurea dispersions
comprising the general structural unit (II), 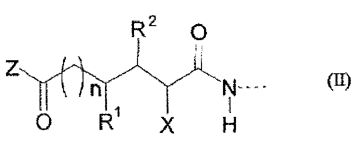 in which
R¹ and R² independently of one another are the radicals H, C₁-C₂₀-(cyclo)alkyl, C₆-C₂₄-aryl, C₁-C₂₀-(cyclo)alkyl ester or amide, C₆-C₂₄-aryl ester or amide, mixed aliphatic/aromatic radicals having 1 to 24 carbon atoms, which may also be part of a 4- to 8-membered ring,
X is an electron-withdrawing group,
Z represents OH, OR³ or NR⁴R⁵, with
R³ a C₁-C₂₀-(cyclo)alkyl radical, C₂-C₁₈-alkenyl radical, C₅-C₈-cycloalkenyl radical, C₂-C₁₈-alkynyl radical, C₆-C₂₄-aryl radical, C₁-C₂₀-(cyclo)alkyl ester or amide radical, C₆-C₂₄-aryl ester or amide radical, C₃-C₁₂-heterocycloalkyl radicals, which can be unsubstituted or substituted by NO₂, amino, cyano, carboxyl, ester, keto or aldehyde groups,
R⁴/R⁵ independently of one another the radicals H, C₁-C₂₀-(cyclo)alkyl, C₂-C₁₃-alkenyl, C₅-C₈-cycloalkenyl, C₂-C₁₈-alkynyl, C₆-C₂₄-aryl, C₁-C₂₀-(cyclo)alkyl ester or amide, C₆-C₂₄-aryl ester or amide, C₃-C₁₂-heterocycloalkyl radicals, which may be unsubstituted or substituted by NO₂, amino, cyano, carboxyl, ester, keto or aldehyde groups, and R⁴ and R⁵ together with the nitrogen atom may form a C₃-C₁₂-cycloalkyl or a C₃-C₁₃-heterocycloalkyl radical containing O, S or N atoms,
and/or the general structural unit (III), 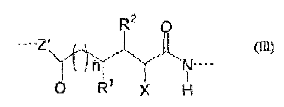 in which
R¹, R² and X have the aforementioned meaning and
Z' represents a bridging oxygen atom or bridging secondary or tertiary nitrogen atom and
n is an integer from 0 to 5.

3. Process for preparing the water-dispersible or water-soluble polyurethane prepolymers according to Claim 1, **characterized in that**
A1) at least one polyisocyanate having aliphatically, cycloaliphatically, araliphatically and/or aromatically attached isocyanate groups are reacted with
A2) polymeric polyols of the average molar weight range from 400 to 6000,
A3) optionally one or more polyhydric alcohols having 1 to 4 hydroxyl groups of the molecular weight range up to 400,
A4) at least one ionic and/or potentially ionic and/or nonionic hydrophilic compound having NCO reactive groups,
A5) at least one CH-acidic cyclic ketone of the general formula (IV), 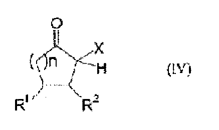 in which
X is an electron-withdrawing group,
R¹ and R² independently of one another are the radicals H, C₁-C₂₀-(cyclo)alkyl, C₆-C₂₄-aryl, C₁-C₂₀-(cyclo)alkyl ester or amide, C₆-C₂₄-aryl ester or amide, mixed aliphatic/aromatic radicals having 1 to 24 carbon atoms, which may also be part of a 4- to 8-membered ring,
n is an integer from 0 to 5, and with
A6) optionally one or more (cyclo)aliphatic monoamines or polyamines or amino alcohols having 1 to 4 amino groups of the molecular weight range up to 400,
in the presence of a catalyst and optionally in the presence of isocyanate-inert organic solvents, the molar ratio of isocyanate groups to isocyanate-reactive groups being from 0.5 to 3.

4. Process according to Claim 3, **characterized in that** polymeric polyols (A2) are polyester-, polyether- or polycarbonate polyols.

5. Process according to Claim 4, **characterized in that** polyether polyols are composed of less than 30 mol% ethylene oxide units.

6. Process for preparing aqueous polyurethane-polyurea dispersions, **characterized in that** the PU prepolymer comprising a polymer backbone with structural units of the formula (I) 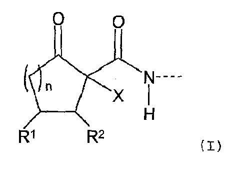 in which
R¹ and R² independently of one another are the radicals H, C₁-C₂₀-(cyclo)alkyl, C₆-C₂₄-aryl, C₁-C₂₀-(cyclo)alkyl ester or amide, C₆-C₂₄-aryl ester or amide, mixed aliphatic/aromatic radicals having 1 to 24 carbon atoms, which may also be part of a 4- to 8-membered ring, and
X is an electron-withdrawing group,
n is an integer from 0 to 5,
and also with structural units of polymeric polyols of the average molar weight range from 400 to 6000, the polymer backbone possessing ionic or potentially ionic and/or nonionically hydrophilicizing groups, is transferred to the aqueous phase and, in the case of the ionic or potentially ionic groups, these are partly or fully neutralized beforehand or simultaneously, a chain extension with aminic components (A4) and/or (A6) taking place before or after the dispersing operation.

7. Process for producing coatings, **characterized in that** aqueous polyurethane-polyurea dispersions according to Claim 2 alone or in combination with curing agents and/or polymers soluble, emulsifiable or dispersible in water and in dispersed form are used.

8. Coating compositions comprising polyurethane-polyurea dispersions according to Claim 2.

9. Substrates coated with coating compositions comprising polyurethane-polyurea dispersions according to Claim 2.

10. Use of the polyurethane prepolymers according to Claim 1 for preparing coating materials, sizes or adhesives.

11. Use of the aqueous polyurethane-polyurea dispersions according to Claim 2 for preparing coating materials, sizes or adhesives.

## Revendications

1. Prépolymères de polyuréthane (PUR) hydrophiles, contenant un squelette polymère comprenant des unités structurales de formule (I) 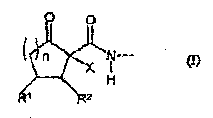 dans laquelle
R¹ et R² sont indépendamment l'un de l'autre les radicaux H, (cyclo)alkyle en C₁-C₂₀, aryle en C₆-C₂₄, ester ou amide de (cyclo)alkyle en C₁-C₂₀, ester ou amide d'aryle en C₆-C₂₄, les radicaux aliphatiques/aromatiques mixtes contenant 1 à 24 atomes de carbone, qui peuvent également faire partie d'un cycle de 4 à 8 éléments,
X est un groupe attracteur d'électrons,
n est un nombre entier de 0 à 5, et
comprenant des unités structurales de polyols polymères de la plage de poids moléculaire moyen allant de 400 à 6 000,
le squelette polymère disposant de groupes ioniques ou potentiellement ioniques et/ou non ioniques à action hydrophilisante.

2. Dispersions aqueuses polyuréthane-polyurée, contenant l'unité structurale générale (II) 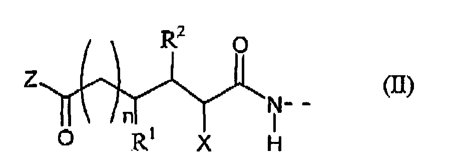 dans laquelle
R¹ et R² sont indépendamment l'un de l'autre les radicaux H, (cyclo)alkyle en C₁-C₂₀, aryle en C₆-C₂₄, ester ou amide de (cyclo)alkyle en C₁-C₂₀, ester ou amide d'aryle en C₆-C₂₄, les radicaux aliphatiques/aromatiques mixtes contenant 1 à 24 atomes de carbone, qui peuvent également faire partie d'un cycle de 4 à 8 éléments,
X est un groupe attracteur d'électrons,
Z représente OH, OR³ ou NR⁴R⁵,
R³ représentant un radical (cyclo)alkyle en C₁-C₂₀, un radical alcényle en C₂-C₁₈, un radical cycloalcényle en C₅-C₈, un radical alcynyle en C₂-C₁₈, un radical aryle en C₆-C₂₄, un radical ester ou amide de (cyclo)alkyle en C₁-C₂₀, un radical ester ou amide d'aryle en C₆-C₂₄, des radicaux hétérocycloalkyle en C₃-C₁₂, qui peuvent être non substitués ou substitués avec des groupes NO₂, amino, cyano, carboxy, ester, céto ou aldéhyde,
R⁴/R⁵ représentant indépendamment l'un de l'autre les radicaux H, (cyclo)alkyle en C₁-C₂₀, alcényle en C₂-C₁₈, cycloalcényle en C₅-C₈, alcynyle en C₂-C₁₈, aryle en C₆-C₂₄, ester ou amide de (cyclo)alkyle en C₁-C₂₀, ester ou amide d'aryle en C₆-C₂₄, des radicaux hétérocycloalkyle en C₃-C₁₂, qui peuvent être non substitués ou substitués avec des groupes NO₂, amino, cyano, carboxy, ester, céto ou aldéhyde, et R⁴ et R⁵ pouvant former ensemble avec l'atome N un radical cycloalkyle en C₃-C₁₂ ou hétérocycloalkyle en C₃-C₁₃ contenant des atomes O, S ou N,
et/ou l'unité structurale générale (III) 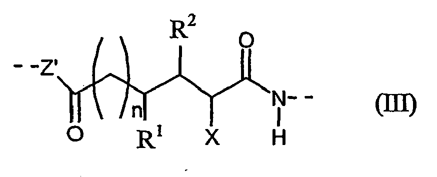 dans laquelle
R¹, R² et X ont la signification donnée précédemment, et
Z' représente un atome O ponté ou N secondaire ou tertiaire ponté, et
n est un nombre entier de 0 à 5.

3. Procédé de fabrication des prépolymères de polyuréthane dispersibles dans l'eau ou solubles dans l'eau selon la revendication 1, **caractérisé en ce que**
A1) au moins un polyisocyanate contenant des groupes isocyanate reliés de manière aliphatique, cycloaliphatique, araliphatique et/ou aromatique est mis en réaction avec
A2) des polyols polymères de la plage de poids moléculaire moyen allant de 400 à 6 000,
A3) éventuellement un ou plusieurs alcools polyvalents contenant 1 à 4 groupes hydroxyle de la plage de poids moléculaire allant jusqu'à 400,
A4) au moins un composé hydrophile ionique et/ou potentiellement ionique et/ou non ionique contenant des groupes réactifs avec les groupes NCO,
A5) au moins une cétone cyclique CH-azide de formule générale (IV) 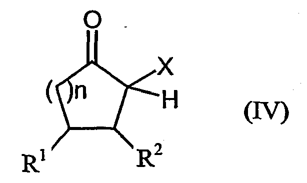 dans laquelle
X représente un groupe attracteur d'électrons, 5
R¹ et R² représentent indépendamment l'un de l'autre les radicaux H, (cyclo)alkylc en C₁-C₂₀, aryle en C₆-C₂₄, ester ou amide de (cyclo)alkyle en C₁-C₂₀, ester ou amide d'aryle en C₆-C₂₄, les radicaux aliphatiques/aromatiques mixtes contenant 1 à 24 atomes de carbone, qui peuvent également faire partie d'un cycle de 4 à 8 éléments,
n est un nombre entier de 0 à 5, et avec
(A6) éventuellement une ou plusieurs mono- ou polyamines ou un ou plusieurs aminoalcools (cyclo)aliphatiques contenant 1 à 4 groupes amino de la plage de poids moléculaire allant jusqu'à 400,
en présence d'un catalyseur et éventuellement en présence de solvants organiques inertes envers les isocyanates, le rapport entre les quantités de matière des groupes isocyanate et des groupes réactifs avec les groupes isocyanate étant de 0,5 à 3.

4. Procédé selon la revendication 3, **caractérisé en ce que** les polyols polymères (A2) sont des polyester-, polyéther- ou polycarbonate-polyols.

5. Procédé selon la revendication 4, **caractérisé en ce que** les polyéther-polyols sont constitués de moins de 30 % en moles d'unités oxyde d'éthylène.

6. Procédé de fabrication de dispersions aqueuses polyuréthane-polyurée, **caractérisé en ce que** le prépolymère de PUR, contenant un squelette polymère comprenant des unités structurales de formule (I) 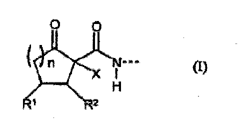 dans laquelle R¹ et R² sont indépendamment l'un de l'autre les radicaux H, (cyclo)alkyle en C₁-C₂₀, aryle en C₆-C₂₄, ester ou amide de (cyclo)alkyle en C₁-C₂₀, ester ou amide d'aryle en C₆-C₂₄, les radicaux aliphatiques/aromatiques mixtes contenant 1 à 24 atomes de carbone, qui peuvent également faire partie d'un cycle de 4 à 8 éléments,
X est un groupe attracteur d'électrons,
n est un nombre entier de 0 à 5,
ainsi que comprenant des unités structurales de polyols polymères de la plage de poids moléculaire moyen allant de 400 à 6 000, le squelette polymère disposant de groupes ioniques ou potentiellement ioniques et/ou non ioniques à action hydrophilisante, est transféré en phase aqueuse et, dans le cas des groupes ioniques ou potentiellement ioniques, ceux-ci sont neutralisés en partie ou en totalité auparavant ou simultanément, un allongement de chaîne ayant lieu avant ou après la dispersion avec des composants aminés (A4) et/ou (A6).

7. Procédé de fabrication de revêtements, **caractérisé en ce que** des dispersions aqueuses polyuréthane-polyurée selon la revendication 2 sont utilisées seules ou en combinaison avec des agents de durcissement et/ou des polymères dispersibles, émulsifiables ou solubles dans l'eau et présents sous forme dispersée.

8. Agents de revêtement, contenant des dispersions polyuréthane-polyurée selon la revendication 2.

9. Substrats revêtus avec des agents de revêtement contenant des dispersions polyuréthane-polyurée selon la revendication 2.

10. Utilisation des prépolymères de polyuréthane selon la revendication 1 pour la fabrication de laques, d'agents d'encollage ou d'adhésifs.

11. Utilisation des dispersions aqueuses polyuréthane-polyurée selon la revendication 2 pour la fabrication de laques, d'agents d'encollage ou d'adhésifs.
